Europäisches Patentamt

European Patent Office

Office européen des brevets

(11) Publication number: **0 302 184**
**A1**

# EUROPEAN PATENT APPLICATION

(21) Application number: 88106974.4

(51) Int. Cl.4: **B01D 33/36** , **B01D 37/02** , **B01D 33/10**

(22) Date of filing: 30.04.88

(30) Priority: 07.08.87 IT 8343387

(43) Date of publication of application:
08.02.89 Bulletin 89/06

(84) Designated Contracting States:
AT BE CH DE ES FR GB GR IT LI LU NL SE

(71) Applicant: FRIULMECCANICA SpA
Viale Trieste 56
I-34076 Romans D'Isonzo (GO)(IT)

(72) Inventor: Gervasi, Enzo
Viale Stazione 13
I-33052 Cervignano del Friuli (UD)(IT)
Inventor: Meroni, Roberto
Viale Libertà 2
I-33170 Pordenone(IT)
Inventor: Lancerotto, Fabio
Via D. Compagni 2
I-20131 Milano(IT)
Inventor: Gerin, Umberto
Via San Giuliano 37
I-33170 Pordenone(IT)

(74) Representative: Petraz, Gilberto Luigi
G.L.P. S.a.s. di Gilberto Petraz P.le Cavedalis
6/2
I-33100 Udine(IT)

(54) **Precoated rotary vacuum filter.**

(57) Precoated rotary vacuum filter (10) which is suitable to filter turbid substances, advantageously for the wine-making and foodstuffs industries in general, and which includes a rotary drum (12) having a precoat (13) that is progressively removed by a doctor (14) able to move micrometrically during working, the drum (12) being upheld by supports (16) and cooperating with a vat (11) that collects the turbid substance, the filter comprising a resilient diaphragm (15) between the doctor (14) and the relative edge of the vat (11).

fig. 1

## PRECOATED ROTARY VACUUM FILTER

This invention concerns improvements to precoated rotary vacuum filters. To be more exact, the invention concerns precoated rotary vacuum filters which employ improvements applied to the area of union between the doctor and the edge of the vat and to means which limit the layer of turbid substances. This invention concerns also the precoated rotary vacuum filters which employ such improvements.

Precoated rotary vacuum filters are especially suitable for suspensions having a medium-high content of solids or containing solids of which the chemical and physical properties are such as will clog a filter surface swiftly in an irreversible manner.

To overcome such drawbacks, the drum of the vacuum filter is coated before the start of filtration with a substantial layer of a specific material such as diatomaceous earth or perlite or another material.

Three angles are substantially formed in a rotary filter on a plane at a right angle to the axis of rotation, namely an immersion and filtration angle corresponding to the angle subtended at the centre of the filter by the arc of the circumference of the filter drum immersed in the liquid in the vat, a drainage and drying angle and a dead angle between the point of contact of the doctor and the free surface of the liquid in the vat.

During filtration the precoat acts as a filtration septum and retention surface from which it is possible to remove the solids deposited thereon. This removal is performed with a doctor blade which advances continuously at a micrometric speed, detaching the clogging solids together with a very thin layer of filter-aid substance.

The ratio of flow of turbid substance to consumption of filter-aid is important for this reason.

Such rotary vacuum filters entail a plurality of problems linked to the capacity of the vat which collects the turbid product or, more simply, the pulp, to the angle of immersion and filtration of the drum, involving also the ratio between the filtration surface and the drying surface, and to the dead angle between the doctor and the surface of the liquid in the vat.

The capacity of the vat holding the turbid product is important for avoiding problems of continuous topping-up, but to this is connected the need for re-mixing the turbid product so as to maintain a given uniformity and at the same time to obviate problems of natural sedimentation.

The angle of immersion of the drum is connected on the one hand to the effective filtration surface and on the other hand to the drainage and drying surface of the layer of precoat.

If on the one hand it is advantageous to have a large angle of immersion of the drum, it is also advantageous on the other hand to obtain satisfactory drying of the product deposited to form the precoat filter layer.

The dead angle existing between the surface of the liquid pulp in the vessel and the doctor is a factor which, as the precoat layer is uncovered and permeable to air, conditions also the volume of air aspirated and therefore the power of the suction pumps.

Moreover, the greater the dead angle, the smaller the other two angles, with a consequent reduction in the capacity of the filter.

Next, it should be borne in mind that in any event it is hard to achieve a constant layer of the turbid substances and that, however many adjustments may be made, discontinuous thicknesses are to be found continuously both circumferentially and in a lengthwise direction on the drum.

The present applicant has designed, tested and embodied the following improvements and has employed them in a rotary filter thus improved for the purpose of obtaining an improvement in the parameters of use and exploitation of precoated rotary vacuum filters which are advantageously, but not only, those employed in the wine-making industry.

According to the invention a resilient diaphragm is provided between the two lateral edges of the vat in cooperation with the side of the vat where the doctor is located. This resilient diaphragm cooperates on three sides with the vat, namely with the two ends and the lengthwise edge of the vat.

On its fourth side or on part of its fourth side the diaphragm cooperates directly with the doctor or with the support of the doctor.

This system enables the upper edges of the vat and therefore the level and capacity of the vat to be raised indirectly and the dead angle between the liquid surface of the turbid substance and the doctor to be reduced to a minimum.

According to a further improvement a plurality of jets is provided on the bottom of the vat and cooperates also with the bottom of the vat, so that the suspension of diatomaceous earth first of all and the turbid substance secondly are always kept in movement with a high degree of uniformity of the turbid substance and therefore of formation of the precoat layer firstly and thereafter of filtration.

In a variant a reciprocal ability to move, at least in a vertical direction, is created as between the drum and the vat so that the immersion angle can be varied as required.

According to the invention the two supports of the drum are upheld by suitable mechanical support, positioning and actuation means, and the engagement seal between the vat and the drum is obtained with a resilient diaphragm which permits reciprocal vertical movement of the vat or the drum and at the same time ensures a hydraulic seal. Moreover, blades to remove lateral deposits cooperate with the ends of the rotary filtration drum, and atomizer nozzles may possibly cooperate with those blades.

With a view to keeping a substantially constant layer of turbid substance both on the lengthwise surface and the circumferential surface of the drum, the present applicant has provided a layer-limiting device in the neighbourhood of the meniscus of departure of the drum from the bath of turbid substance.

This layer-limiting device may operate by mechanical, resilient, pneumatic, hydraulic or electrical adjustment, and such adjustment is the determination of the residual layer after the employment of such limiting device.

Mechanical adjustment can be determined by appropriate paths of a known thickness positioned, for instance, at the sides of the drum or in a known position thereon.

Desired transmission ratios enable the residual layer to be varied according to the purposes to be achieved.

Resilient adjustment is determined, in cooperation also with other systems, by a resilient traction or thrust system which presses the limiting device towards the cylinder of the drum.

Pneumatic, hydraulic or electrical adjustment is achieved with jacks or electric motors which act on the layer-limiting device.

Such layer-limiting device includes a movable support and a scraper element. The movable support may be mounted on a slide block or be rocked, for instance, on a quadrilateral element.

The scraper element consists advantageously of a semi-rigid material such as a rubberized fabric with a given degree of resilience.

The angle at which the scraper element acts on the drum decides the method of working and may be acute, a right angle or obtuse in relation to the tangent to the drum.

Distribution means, for instance operating by jet or of another type, may be included in cooperation with the zone of build-up of material removed.

Precoated rotary vacuum filters are therefore defined by the contents of Claim 1, while the dependent claims describe some variants.

The attached figures, which are given as a non-restrictive example, show the following:-

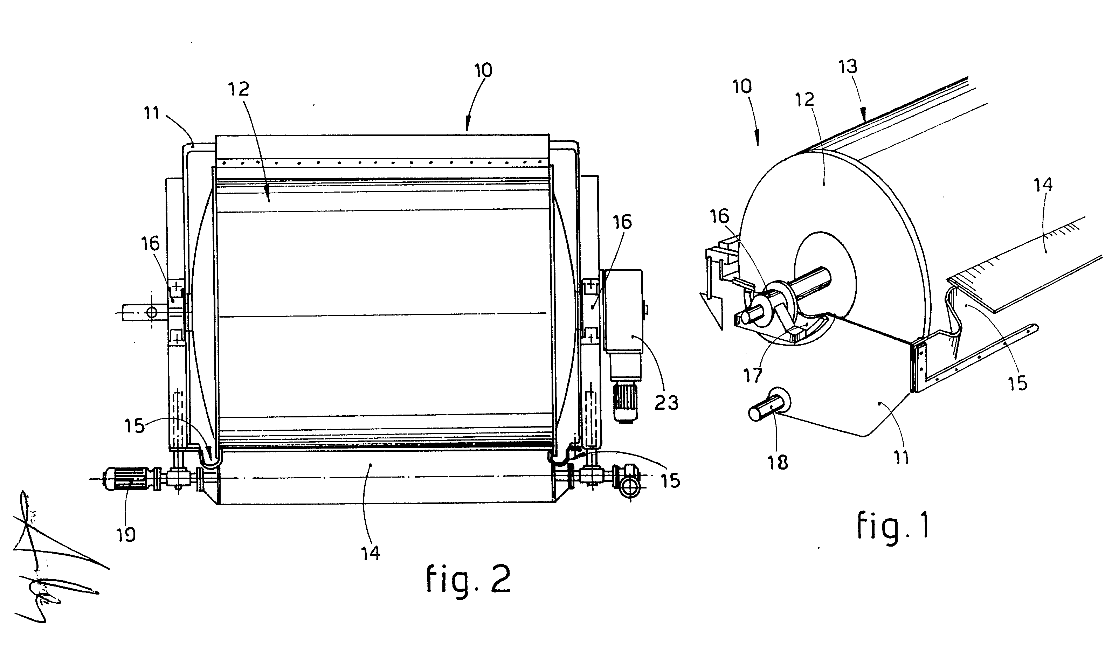

Fig.1 gives a three-dimensional diagram of a filter comprising the improvements according to the invention;

Fig.2 shows from above a filter according to the invention;

Figs.3 show a cross section of the filter of Fig.2.

Fig.4 shows a detail;

Fig.5 shows a layer-limiting device.

In the attached figures, which are given as an example, a filter 10 comprises a rotary drum 12 cooperating with a vat 11 supported on a base 20.

The rotary drum 12 is upheld by supports 16 and set in rotation by a motor 23. During working a precoat layer 13 is deposited on the cylindrical, circumferential periphery of the rotary drum 12.

A doctor 14 cooperates with the cylindrical, circumferential periphery of the rotary drum 12 and with the precoat layer 13.

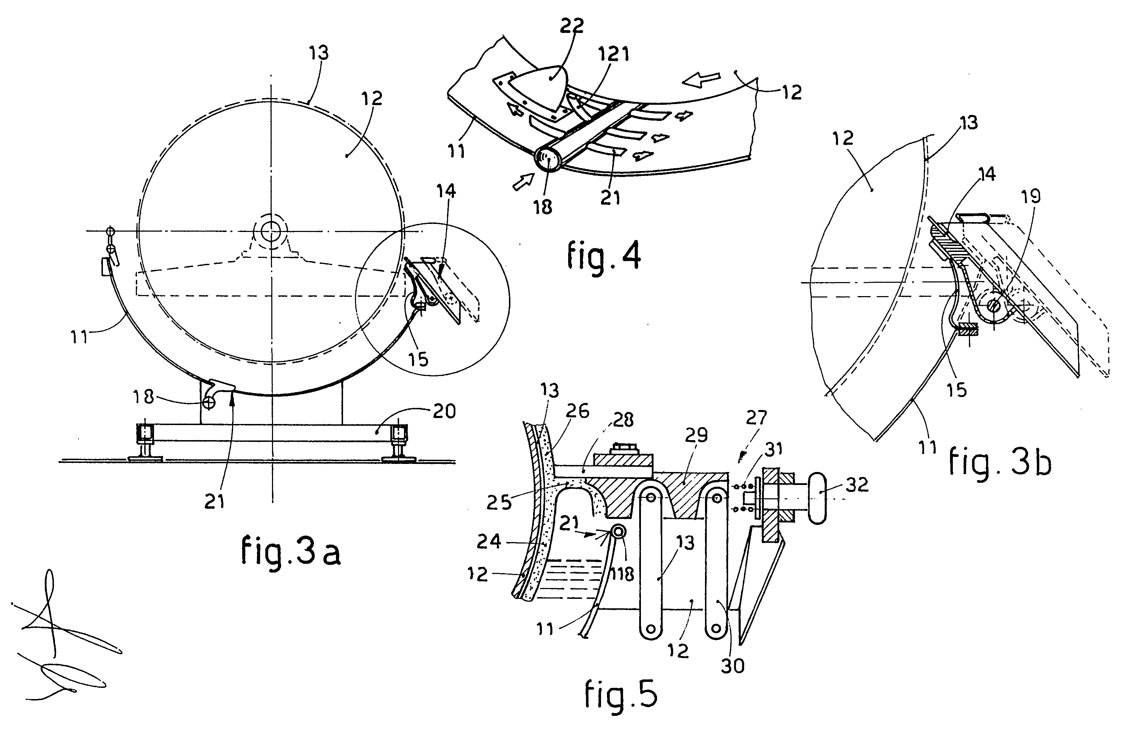

Movement of the doctor 14 (Fig.3b) is micrometric and is obtained with a feed unit 19.

Everything thus far is a part of the prior art.

According to a first improvement the upper edge of the vat 11 on the side facing the doctor 14 is connected to the doctor 14 by a resilient diaphragm 15, which extends substantially vertically and in fact connects the two ends of the vat 11.

This resilient diaphragm 15 enables the doctor 14 to perform the required movements and at the same time raises the edge of the vat and obtains a hydraulic seal engagement so that the turbid substance cannot leave the vat.

This improvement enables the capacity of the vat 11 to be increased and at the same time the dead angle to be reduced between the free surface of the turbid substance and the doctor, increasing thereby the value of the angle of immersion of the drum.

According to a further improvement an inlet pipe 18 is located in the bottom of the vat 11 and cooperates with injector nozzles 21 which inject air to sweep the inside of the vat and also tangentially to its inner surface, thus keeping the turbid substance in a uniform suspension. The injector nozzles 21 are positioned advantageously in the first eight portion of a circle after the vertical.

Scraper blades 22 which are located on the bottom of the vat and can be positioned as required are included in cooperation with the ends of the drum 12 and advantageously with the neighbourhood of the periphery of those ends.

It is advantageous that with the blades 22 there should cooperate one or more nozzles 121 having the task of atomizing any deposits which the blades 22 may detach.

According to the invention the vat 11 may be provided with a reciprocal movement in relation to the drum 12 or viceversa, the purpose being to enable the angle of immersion of the drum within the vat to be varied.

Thus, the drum 12 may be immovable while the vat 11 can move vertically, or else the vat 11 may be immovable while the drum 12 can move vertically.

According to one possibility, the supports 16 may be able to move vertically so as to vary the angle of immersion of the rotary drum 12 as required. The ability of the supports 16 to move vertically may be obtained, for instance, with a threaded bolt or another means normally used in the mechanical art.

Where the vat 11 and drum 12 can be moved reciprocally in relation to each other, each support 16 of the drum will be connected advantageously to the respective edge of the vat 11 by a resilient diaphragm 17 which serves to provide a hydraulic seal engagement for the vat.

A layer-limiting device 27 is provided to limit the layer of turbid substance 26 in the neighbourhood of the edge of the drum 12 leaving the immersion bath to a required value in a substantially constant manner.

This limiting device 27 keeps the layer of turbid substance 26 substantially constant by removing any excess amounts 25, however great such excess amount 24 of turbid substance ascending on the drum 12 may be.

Nozzles 21 which sweep at least the surface of the meniscus or cooperate therewith may cooperate with the limiting device 27 in breaking up the excess amounts 25. These nozzles 21 may cooperate also with the lower side of the limiting device 27 and are fed through a pipe 118.

In the case shown the limiting device 27 is supported by two levers 30 arranged as a parallelogram and is thrust towards the layer of turbid substance by a thrust spring 31 having its pressure adjustable by regulation means 32 and acts substantially at a right angle to the tangent to the drum.

In this example the limiting means consists of a movable support 29 that upholds and positions a scraper element 28.

The scraper element 28 is made advantageously of a rubberized fabric but could consist of rubber containing fillers, a semi-rigid and semi-resilient plastic or wood or another material suitable for the purpose.

The angle of incidence of the scraper element 28 may be normal to the tangent, as is substantially the case in Fig.5, or may be at an angle between plus 30° and minus 30° thereto, that is to say, within a field of about 120°.

The limiting device 27 may have a constant angle of incidence or an angle of incidence adjustable within a given field of amplitude, which may be as great as 120° (plus or minus 60°) in relation to a line normal to the tangent to the drum.

The limiting device 27 may be positioned in such a way that the point of contact of the scraper element 28 is in the immediate neighbourhood of the meniscus of the bath or is at a distance contained within up to 20-30° in relation to the centre of the drum 12.

## Claims

1 - Precoated rotary vacuum filter (10) which is suitable to filter turbid substances, advantageously for the wine-making and foodstuffs industries in general, and which includes a rotary drum (12) having a precoat (13) that is progressively removed by a doctor (14) able to move micrometrically during working, the drum (12) being upheld by supports (16) and cooperating with a vat (11) that collects the turbid substance, the filter being characterized in that it comprises a resilient diaphragm (15) between the doctor (14) and the relative edge of the vat (11).

2 - Filter (10) as claimed in Claim 1, in which the resilient diaphragm (15) connects substantially the two ends of the vat (11).

3 - Filter (10) as claimed in Claim 1 or 2, in which the resilient diaphragm (15) connects the edge of the vat (11) to the doctor (14).

4 - Filter (10) as claimed in any claim hereinbefore, in which the vat (11) and the drum (12) are reciprocally movable.

5 - Filter (10) as claimed in any claim hereinbefore, in which the supports (16) of the drum (12) are connected to the relative end of the vat (11) by a resilient diaphragm (17).

6 - Filter (10) as claimed in any claim hereinbefore, in which scraper blades (22) are comprised on the bottom of the vat (11) and cooperate with the neighbourhood of the periphery of the ends of the drum (12).

7 - Filter (10) as claimed in any claim hereinbefore, in which an injector nozzle (121) cooperates with each scraper blade (22).

8 - Filter (10) as claimed in any claim hereinbefore, in which injector nozzles (21) in cooperation with the bottom of the vat (11) are included in the first eighth of a circle after the vertical in the direction of movement of the drum (12).

9 - Filter (10) as claimed in any claim hereinbefore, in which the injector nozzles (21) cooperate with the bottom of the vat (11) and tangentially thereto.

10 - Filter (10) as claimed in any claim hereinbefore, in which a layer-limiting device (27) is included in the neighbourhood of the meniscus of the turbid liquid and of the position of departure of the drum (12) from the bath.

11 - Filter (10) as claimed in any claim hereinbefore, in which the layer-limiting device (27) is able to move in relation to the periphery of the drum (12).

12 - Filter (10) as claimed in any claim hereinbefore, in which the layer-limiting device (27) operates by mechanical adjustment of the layer.

13 - Filter (10) as claimed in any of Claims 1 to 11 inclusive, in which the layer-limiting device (27) operates by pneumatic, hydraulic or electrical adjustment of the layer.

14 - Filter (10) as claimed in any claim hereinbefore, in which the layer-limiting device (27) operates by resilient adjustment of the layer.

15 - Filter (10) as claimed in any claim hereinbefore, in which the layer-limiting device (27) comprises a scraper element (28) positioned at a determined angle of incidence.

16 - Filter (10) as claimed in any claim hereinbefore, in which the angle of incidence of the scraper element (28) in relation to the tangent to the drum (12) lies between plus 60° and minus 60°.

17 - Filter (10) as claimed in any claim hereinbefore, in which the point of contact between the scraper element (28) and the turbid substance (24) lies between the immediate neighbourhood of the meniscus and a distance contained within 30° to the centre of the drum (12).

fig. 2

fig. 1

EP 0 302 184 A1

fig. 3b

fig. 5

fig. 4

fig.3a

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | WO-A-8 200 418 (P.O. LUNDIN et al.) <br> * Page 3, lines 9-11; page 4, lines 33-35; page 5, lines 7-14; figures 1,2 * | 1-4 | B 01 D 33/36 <br> B 01 D 37/02 <br> B 01 D 33/10 |
| A | DE-C- 342 052 (R. TIMM) <br> * Page 2, lines 69-82; figure 1 * | 8,9 | |
| A | US-A-2 221 993 (H.F. OSWALD) <br> * Figure * | 1 | |
| A | GB-A-1 335 196 (ICHIRO NODA) <br> * Page 1, lines 15-21 * | 1 | |

TECHNICAL FIELDS SEARCHED (Int. Cl.4)

B 01 D

The present search report has been drawn up for all claims

| Place of search | Date of completion of the search | Examiner |
|---|---|---|
| THE HAGUE | 21-06-1988 | MARZENKE J. |

EPO FORM 1503 03.82 (P0401)